# EUROPEAN PATENT SPECIFICATION

(11) **EP 3 926 382 B1**
(45) Date of publication and mention of the grant of the patent: **29.05.2024**
(21) Application number: 20181035.5
(22) Date of filing: 19.06.2020
(51) Int. Cl.: G02B 7/182, G02B 27/01

(54) **MIRROR SYSTEM FOR MOUNTING A MIRROR OF A HEAD-UP DISPLAY**
SPIEGELSYSTEM ZUR MONTAGE EINES SPIEGELS EINER HEAD-UP-ANZEIGE
SYSTÈME DE MIROIR POUR LE MONTAGE D'UN MIROIR D'UN AFFICHAGE TÊTE HAUTE

(43) Date of publication of application: 22.12.2021
(73) Proprietor: Jabil Inc., St. Petersburg, Florida 33716 (US)
(72) Inventor: POTAKOWSKYJ, Christoph, 1100 Wien (AT)
(74) Representative: Gruber, Philipp

(56) References cited:
- WO-A1-2018/147007
- DE-A1-102016 122 420
- JP-A- 2002 036 910
- JP-A- 2018 127 128
- JP-A- 2018 127 129
- JP-A- 2019 001 346
- JP-A- 2019 011 833
- KR-A- 20190 135 180

## Description

The invention relates to a mirror system for mounting a mirror of a Head-Up Display, the system comprising a mirror mount and a housing, wherein the mirror mount is pivotably mounted in the housing and the housing comprises a position adjusting means interacting with a protrusion of the mirror mount for moving the mirror mount with respect to the housing.

A head-up display or HUD is a transparent display panel that presents information to a user without requiring users to look away from a preferred viewing direction. The origin of the name stems from a pilot being able to view information with the head positioned "up" and looking forward, instead of angled down looking at lower instruments. Although they were initially developed for military aviation, HUD systems are nowadays used in commercial aircraft, automobiles, and other applications.

For example, a driver can view traffic and the road in front of the vehicle through the windshield of the vehicle while at the same time a projector projects information onto the windshield. Such a HUD system typically comprises a video data source such as a computer, a projector, and a mirror for deflecting the output of the projector onto the windshield.

Mirror positioning mechanisms require careful consideration to ensure the performance in all kinds of environmental conditions such as changing humidity and a wide range of temperatures especially within a dashboard of a car. A key design consideration relates to vibration. A mobile HUD system must have a high resistance to vibration in order to provide a stable image for the user. Failure to control vibration associated with the mirror in particular can result in a display that is irritating for the viewer and unpleasant to use over extended periods. Accordingly, a mirror and its respective mirror mount in a HUD system should have a high stability and a high natural frequency.

Thus the mirror needs to be positioned very rigidly in the operating position to prevent vibration and reduced image quality. Therefore, a mirror holder and the connecting mount on the car body have to be very stiff.

To achieve this, the mirror itself is usually mounted on a mirror mount, which is in turn mounted in a housing in such a way that it can pivot about a mirror axis. A spring is mounted between the mirror mount and the housing to spring-tension the mirror mount with respect to the housing.

To adjust the position of the mirror of the HUD system, from US 10,067,345 B2 it is known to provide the mirror mount with a protrusion, which can in turn be moved by a position adjusting means located within the housing. To this end, the position adjusting means comprises a motor, which imparts a linear movement onto the mirror mount by means of a screw transmission.

In practice, however, the position adjusting means with a screw transmission causes a very stiff and inflexible control of the mirror mount. A screw does not allow to adapt the ratio between motor and mirror movement, which is required for a fast movement to the operating position and a slow movement for accurate fine adjustment.

A mirror system according to the preamble of claim 1 is known from DE102016122420A. However, it takes long for the mirror to move from the closed position to the opened position.

Another mirror system is known from KR20190135180A. This system enables a sequential movement for moving a cover, lifting a combiner, and tilting the combiner by means of three differently shaped guides on a cam wheel.

It is an object of the invention to provide a mirror system for mounting a mirror of a Head-Up Display with an improved control of the mirror mount.

This aim is achieved by means of a mirror system for mounting a mirror of a Head-Up Display, the system comprising a mirror mount and a housing, wherein the mirror mount is pivotably mounted in the housing and the housing comprises a position adjusting means interacting with a protrusion of the mirror mount for moving the mirror mount with respect to the housing, wherein the position adjusting means comprises a rotatable cam wheel for guiding the protrusion, and wherein the cam wheel is configured to move the protrusion and thus the mirror mount when the cam wheel is rotated.

The cam wheel of the inventive mirror system has the advantage that the mirror mount can be controlled in an improved manner. In contrast to the screw transmission used in the state of the art, the cam wheel allows for a more refined and selective movement of the mirror mount as the guide directly leads the protrusion.

Furthermore, the guide has two sections configured such that, when the cam wheel is moved with a constant first angular velocity, the mirror mount is moved with a second angular velocity when the protrusion is located in the first section and is moved with a third angular velocity when the protrusion is located in the second section. This can be used to employ two modes of operation, such that for example the first section of the guide can be used to impart only a small movement onto the mirror mount to yield a precise adjustment to the field of view of a user and the second section can be used to quickly flip the mirror mount into a parking position. In the parking position, the mirror mounted on the mirror mount may face the housing to be shielded from sunlight.

Preferably, the protrusion is engaged within the guide without play in a direction substantially normal to the axis of rotation of the cam wheel. In this embodiment, the guide provides a firm grip on the protrusion, which is especially preferred for the mirror system for mounting a mirror of a Head-Up Display. As vehicles, in which the Head-Up Display is usually mounted, impart a substantial amount of vibrations onto the mirror system, the guide ensures that the protrusion and thus the mirror mount does not vibrate independently of the housing.

Further preferably, the cam wheel comprises a rotatable base plate on which the guide is mounted, wherein the base plate is preferably toothed on its outer circumference. In this embodiment, the cam wheel can be built in a very rigid manner as the base plate supports the guide, and the motor may act directly onto the base plate, especially if it comprises said toothed circumference. The cam wheel can be built even more rigidly if the guide and the base plate are formed as a single unit, for example as an injection-molded plastic piece.

In an advantageous embodiment, the guide forms at least a section of a spiral around an axis of rotation of the cam wheel. If the guide assumes the shape of a spiral, it will naturally have a gradient, i.e., the protrusion will be pulled towards or away from the center of the spiral upon rotating the cam wheel. A smooth control of the mirror mount can thus be assured.

Advantageously, wherein the cam wheel is configured in such a way that it has to be rotated by at least 180° to move the protrusion from a furthest extended to a furthest retracted position. By means of this, the cam wheel can act as a sufficiently large transmission between the motor and the protrusion, thus providing a smooth and precise movement of the mirror mount.

To provide a steady movement of the mirror mount when rotating the cam wheel, the cam wheel may be configured to impart a constant velocity onto the mirror mount upon rotating the cam wheel with a constant angular velocity over at least a section of the guide. However, the cam wheel can also be adapted in such a way that the non-linear pivoting movement of the mirror mount in the housing is adjusted to an expected height of the user, in which case the cam wheel can be configured in such a way that it imparts a varying velocity onto the mirror mount upon rotating the cam wheel with a constant angular velocity.

To achieve an even smoother movement of the mirror mount, the side of the mirror mount provided with the protrusion can be biased towards the housing by means of a spring. This improves the overall quality and feel of the movement of the mirror mount.

In general, the cam wheel could be arranged at one side of the housing such that the axis of rotation of the cam wheel lies below or next to one of the mounting positions of the mirror mount in the housing. However, it is preferred if the cam wheel is mounted in the housing such that its axis of rotation lies symmetrically between the mounting positions of the mirror mount in the housing. Practical embodiments have shown that the mirror mount can be supported in an especially rigid manner when the axis of rotation of the cam wheel lies symmetrically to the mirror mount, i.e., symmetrically between the mounting positions of the mirror mount in the housing. The symmetrical mounting position of the cam wheel has shown to suppress a stimulation of the toroidal mode of the mirror mount, i.e., torsion oscillations.

Further details and advantages of the mirror system for a head-up display according to the invention will become more apparent in the following description and the accompanying drawings.

Figure 1 shows a mirror system according to the invention in a perspective view.

Figure 2 shows a side view of the mirror system of figure 1.

Figure 3 shows the cam of the mirror system of figures 1 and 2 in a top view.

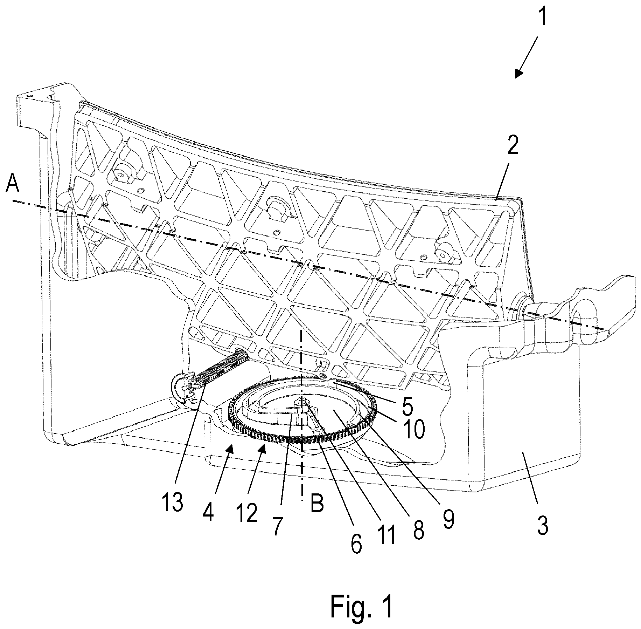

Figure 1 shows a mirror system 1 comprising a mirror mount 2 and a housing 3. The mirror system 1 is especially designed to be employed in a Head-Up Display (HUD) in which a HUD projector projects information via a mirror mounted on the mirror mount 2 onto a windshield of a vehicle, for example. Herein, the housing 3 could be formed integrally with a dashboard of the vehicle or alternatively be mounted thereon.

The mirror mount 2 is suspended within the housing 3 in such a fashion that the mirror mount 2 can pivot within in the housing 3 about an axis A, preferably without play. This is desired as the mirror of the HUD system should be adjustable to a height of a user of the HUD system. Furthermore, pivoting the mirror mount 2 allows the mirror to be tilted into a so-called parking position, in which the mirror substantially faces the housing 3 or is at least deviated from a standard position such that light shining onto the mirror is not constantly deflected onto a projector of the HUD system when the HUD system is not in use.

To select a desired angular position of the mirror mount 2 with respect to the housing 3, i.e., to select an angular position of the mirror mount 2 about the axis A, the housing 3 comprises position adjusting means 4. The position adjusting means 4 interacts with a protrusion 5 of the mirror mount 2 for moving the mirror mount 2 with respect to the housing 3. The protrusion 5 is preferably mounted rigidly on the mirror mount 2 such that a force applied onto the protrusion 5 directly acts onto the mirror mount 2. As the mirror mount 2 can only be pivoted about said axis A, the protrusion 5 cannot be moved in a direction parallel to the axis A. The protrusion 5 may be a sliding pin with a circular cross section, for example.

The position adjusting means 4 comprises a motor (not shown) and a cam wheel 6 that acts as a transmission between the motor and the protrusion 5. The cam wheel 6 can be rotated about an axis B, which is substantially perpendicular to the axis A and preferably substantially vertical in a position of use of the mirror system 1. The cam wheel 6 has a guide 7, in which the protrusion 5 engages.

In the depicted embodiment, the axis B of rotation of the cam wheel 6 lies approximately midway between the two mounting positions of the mirror mount 2 in the housing 3. Furthermore, also the protrusion 5 can be arranged symmetrically on the mirror mount 2 between the mounting positions of the mirror mount 2 in the housing 3. Thereby, the mirror mount 2 can be guided in an especially rigid manner. The axis B of rotation of the cam wheel 6 does not have to intersect the axis A about which the mirror mount 2 pivots.

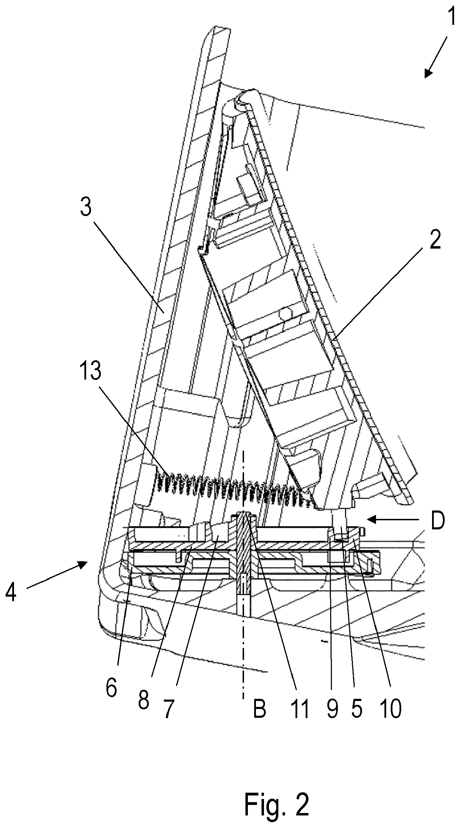

As can be seen in figure 2, the cam wheel 6 and its guide 7 are configured in such a way that when the cam wheel 6 is rotated in one direction, the protrusion 5 is moved in a direction D perpendicular to the axis B of rotation of the cam wheel 6. If the cam wheel 6 is rotated in the corresponding other direction, the protrusion 5 is moved in a direction -D. As the protrusion 5 can only be pivoted about axis A, the protrusion 5 will be moved within the guide 7 and only a change of the distance of the guide 7 to the axis B of rotation (i.e., a gradient of the guide 7) causes the protrusion 5 to be pivoted about axis A. Thereby, the mirror mount 2 can be pivoted about said axis A by rotating the cam wheel 6 about axis B.

The guide 7 is preferably mounted on a base plate 8 and may comprise two side walls 9, 10 for guiding the protrusion 5 without play in a direction substantially normal to the axis B of rotation of the cam wheel 6. The base plate 8 may have a mounting socket 11, which is rotatably supported at the housing 3. The base plate 8 is however optional and can be omitted in embodiments in which the guide 7 is directly equipped with a mounting socket, for example, which may be directly driven by the motor.

In the of figure 1, the motor acts on the base plate 8, which for this reason is toothed on its outer circumference. For example, the motor may engage with the base plate 8 at position 12, such that position 12, axis B, and the point in which the protrusion 5 is located in the guide 7 all lie along a straight line. Alternatively, the motor may act on the cam wheel 6 axially, e.g., if the motor acts on the mounting socket 11.

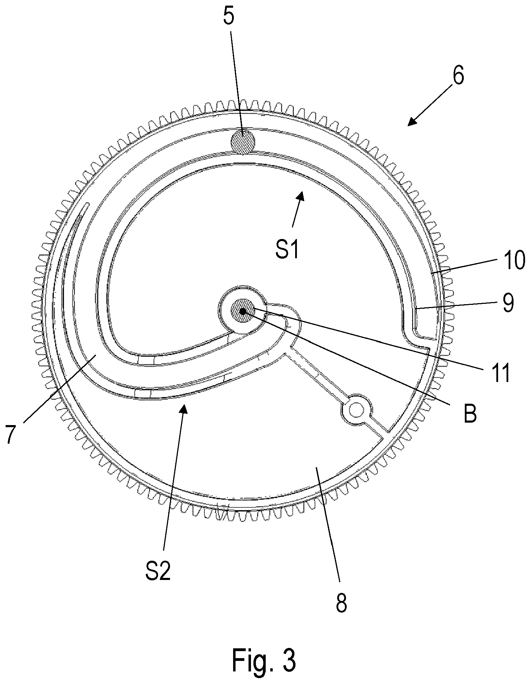

As can be seen in figure 3, the guide 7 forms a section of a spiral around the axis B of rotation of the cam wheel 6. The guide 7 can assume the shape of a section of an Archimedean spiral, a hyperbolic spiral, logarithmic spiral, or any other spiral known in the art. The choice of spiral and its gradient impacts the transmission between the motor and the protrusion 5. For example, the spiral can be chosen in such a way that rotating the cam wheel 6 about axis B with a constant angular velocity leads to a constant angular velocity of the mirror mount about axis A, at least over a section of the guide.

The mirror mount 2 may have a maximum and a minimum angle of deflection about axis A. In other words, the mirror mount 2 may be tilted up to a maximum position in the front and maximum position in the back. The cam wheel 6 and its guide 7 may be configured in such a way that the cam wheel 6 has to be rotated by at least 180° or substantially 180° to move the protrusion 5 from a furthest extended position (causing the mirror mount 2 to be pivoted to the back) to a furthest retracted position (causing the mirror mount 2 to be pivoted to the front). Such a feature is achieved with a guide 7 that forms a spiral over half the circumference of the cam wheel 6 as is shown in figure 3. Of course, other shapes of spirals can be used too, for example spirals that revolve about axis B multiple times.

The guide 7 shown in figure 3 furthermore has the property that it forms two sections, namely a first section S1 with a first gradient and a second section S2 with a second gradient, the first gradient being smaller than the second gradient. In other words, when the protrusion is located within the first section S1 of the guide 7, a constant first angular velocity v1 of the cam wheel 6 causes the mirror mount 2 to rotate with a constant second angular velocity v2. When the protrusion 5 is located within the second section S2 of the guide 7, the same constant first angular velocity v1 of the cam wheel 6 causes the mirror mount 2 to rotate with a constant third angular velocity v3, which is higher than the second angular velocity v2.

The first and second sections S1 and S2 can be used to operate the mirror mount 2 in two operating modes. In the first operating mode, when the protrusion 5 is located within the first section S1 of the guide 7, the mirror mount 2 can slowly and steadily be pivoted to adjust the mirror system 1 to a height of a user. In the second operating mode, when the protrusion 5 is located within the second section S2 of the guide 7, the mirror mount 2 and can be sharply and quickly folded into a parking position in which the mirror of the mirror mount 2 does not reflect sunlight onto a projector of the HUD display.

In principle, only the guide 7 is necessary to move the mirror mount 2 and hold said mirror mount 2 in place. However, preferably a spring 13 can be employed to bias the side of the mirror mount 2 provided with the protrusion 5 towards the housing 3.

In an alternative embodiment of the cam wheel 6 (not shown), the cam wheel 6 can be a plate with an irregular, for example oval, outer diameter, onto which the protrusion 5 abuts. If the protrusion 5 is biased against the outer diameter of the cam wheel 6, e.g., by means of a spring, the outer diameter can then act as a guide for the protrusion 5. Upon rotation of the cam wheel 6, the protrusion 5 will then follow the outer diameter such that the mirror mount 2 pivots about the axis A.

## Claims

1. Mirror system (1) for mounting a mirror of a Head-Up Display, the system (1) comprising a mirror mount (2) and a housing (3), wherein the mirror mount (2) is pivotably mounted in the housing (3) such that the mirror mount (2) can pivot within the housing (3) about an axis (A) of the mirror mount (2) and the housing (3) comprises a position adjusting means (4) interacting with a protrusion (5) of the mirror mount (2) for moving the mirror mount (2) with respect to the housing (3),
wherein the position adjusting means (4) comprises a rotatable cam wheel (6) with a guide (7) for guiding the protrusion (5), wherein the cam wheel (6) is configured to move the protrusion (5) in a direction substantially perpendicular to an axis (B) of rotation of the cam wheel for pivoting the mirror mount (2) when the cam wheel (6) is rotated, wherein the axis (B) of rotation of the cam wheel (6) is substantially perpendicular to the axis (A) of the mirror mount (2),
**characterized in that** the guide (7) has two sections (S1, S2) configured such that, when the cam wheel (6) is moved with a constant first angular velocity, the mirror mount (2) is moved with a second angular velocity when the protrusion (5) is located in the first section (S1) and is moved with a third angular velocity when the protrusion (5) is located in the second section (S2).

2. Mirror system (1) according to claim 1, wherein the protrusion (5) is engaged within the guide (7) without play in a direction substantially normal to the axis (B) of rotation of the cam wheel (6).

3. Mirror system (1) according to claim 1 or 2, wherein the cam wheel (6) comprises a rotatable base plate (8) on which the guide (7) is mounted, wherein the base plate (8) is preferably toothed on its outer circumference.

4. Mirror system (1) according to any one of claims 1 to 3, wherein the guide (7) forms at least a section of a spiral around an axis (B) of rotation of the cam wheel (6).

5. Mirror system (1) according to any one of claims 1 to 4, wherein the cam wheel (6) is configured in such a way that it has to be rotated by at least 180° to move the protrusion (5) from a furthest extended to a furthest retracted position.

6. Mirror system (1) according to any one of claims 1 to 5, wherein the cam wheel (6) is configured to impart a constant velocity onto the mirror mount (2) upon rotating the cam wheel (6) with a constant angular velocity over at least a section of the guide (7).

7. Mirror system (1) according to any one of claims 1 to 6, wherein the side of the mirror mount provided with the protrusion is biased towards the housing by means of a spring.

8. Mirror system (1) according to any one of claims 1 to 7, wherein the cam wheel (6) is mounted in the housing (3) such that its axis (B) of rotation lies symmetrically between the mounting positions of the mirror mount (2) in the housing (3).

## Patentansprüche

1. Spiegelsystem (1) zur Befestigung eines Spiegels eines Head-Up-Displays, wobei das System (1) eine Spiegelbefestigung (2) und ein Gehäuse (3) umfasst, wobei die Spiegelbefestigung (2) schwenkbar im Gehäuse (3) befestigt ist, sodass sich die Spiegelbefestigung (2) im Gehäuse (3) um eine Achse (A) der Spiegelbefestigung (2) verschwenken kann, und das Gehäuse (3) ein Stellungseinstellmittel (4) umfasst, das mit einem Vorsprung (5) der Spiegelbefestigung (2) wechselwirkt, um die Spiegelbefestigung (2) in Bezug auf das Gehäuse (3) zu bewegen,
wobei das Stellungseinstellmittel (4) ein rotierbares Nockenrad (6) mit einer Führung (7) zum Führen des Vorsprungs (5) umfasst, wobei das Nockenrad (6) ausgelegt ist, um den Vorsprung (5) in eine Richtung im Wesentlichen orthogonal zu einer Rotationsachse (B) des Nockenrads zu bewegen, um die Spiegelbefestigung (2) zu schwenken, wenn das Nockenrad (6) rotiert wird, wobei die Rotationsachse (B) des Nockenrads (6) im Wesentlichen orthogonal zur Achse (A) der Spiegelbefestigung (2) ist,
**dadurch gekennzeichnet, dass**
die Führung (7) zwei Abschnitte (S1, S2) umfasst, die derart ausgelegt sind, dass, wenn das Nockenrad (6) mit einer konstanten ersten Winkelgeschwindigkeit bewegt wird, die Spiegelbefestigung (2) mit einer zweiten Winkelgeschwindigkeit bewegt wird, wenn sich der Vorsprung (5) im ersten Abschnitt (S1) befindet, und mit einer dritten Winkelgeschwindigkeit bewegt wird, wenn sich der Vorsprung (5) im zweiten Abschnitt (S2) befindet.

2. Spiegelsystem (1) nach Anspruch 1, wobei der Vorsprung (5) in eine Richtung im Wesentlichen normal zur Rotationsachse (B) des Nockenrads (6) ohne Spiel in der Führung (7) in Eingriff ist.

3. Spiegelsystem (1) nach Anspruch 1 oder 2, wobei das Nockenrad (6) eine rotierbare Basisplatte (8) umfasst, auf der die Führung (7) befestigt ist, wobei die Basisplatte (8) an ihrem Außenumfang vorzugsweise gezähnt ist.

4. Spiegelsystem (1) nach einem der Ansprüche 1 bis 3, wobei die Führung (7) zumindest einen Abschnitt einer Spirale um eine Rotationsachse (B) des Nockenrads (6) bildet.

5. Spiegelsystem (1) nach einem der Ansprüche 1 bis 4, wobei das Nockenrad (6) derart ausgelegt ist, dass es um zumindest 180° rotiert werden muss, um den Vorsprung (5) von einer am weitesten ausgefahrenen zu einer am weitesten eingefahrenen Stellung zu bewegen.

6. Spiegelsystem (1) nach einem der Ansprüche 1 bis 5, wobei das Nockenrad (6) ausgelegt ist, um der Spiegelbefestigung (2) eine konstante Geschwindigkeit zu verleihen, wenn das Nockenrad (6) mit einer kontanten Winkelgeschwindigkeit über zumindest einen Abschnitt der Führung (7) rotiert wird.

7. Spiegelsystem (1) nach einem der Ansprüche 1 bis 6, wobei die Seite der Spiegelbefestigung, die mit dem Vorsprung versehen ist, mittels einer Feder zum Gehäuse hin vorgespannt ist.

8. Spiegelsystem (1) nach einem der Ansprüche 1 bis 7, wobei das Nockenrad (6) so im Gehäuse (3) befestigt ist, dass seine Rotationsachse (B) symmetrisch zwischen den Befestigungspositionen der Spiegelbefestigung (2) im Gehäuse (3) liegt.

## Revendications

1. Système de miroir (1) pour monter un miroir d'un affichage tête haute, le système (1) comprenant une monture de miroir (2) et un boîtier (3), dans lequel la monture de miroir (2) est montée de manière pivotante dans le boîtier (3) de sorte que la monture de miroir (2) peut pivoter à l'intérieur du boîtier (3) autour d'un axe (A) de la monture de miroir (2) et le boîtier (3) comprend des moyens d'ajustement de position (4) interagissant avec une saillie (5) de la monture de miroir (2) pour déplacer la monture de miroir (2) par rapport au boîtier (3), dans lequel les moyens d'ajustement de position (4) comprend une roue à cames rotative (6) avec un guide (7) pour guider la saillie (5), dans lequel la roue à cames (6) est configurée pour déplacer la saillie (5) dans une direction sensiblement perpendiculaire à un axe (B) de rotation de la roue à cames afin de faire pivoter la monture de miroir (2) lorsque la roue à cames (6) est tournée, dans lequel l'axe (B) de rotation de la roue à cames (6) est sensiblement perpendiculaire à l'axe (A) de la monture de miroir (2),
**caractérisé en ce que**
le guide (7) présente deux sections (S1, S2) configurées de telle sorte que, lorsque la roue à cames (6) est déplacée avec une première vitesse angulaire constante, la monture de miroir (2) est déplacée avec une deuxième vitesse angulaire lorsque la saillie (5) est située dans la première section (S1) et est déplacée avec une troisième vitesse angulaire lorsque la saillie (5) est située dans la deuxième section (S2).

2. Système de miroir (1) selon la revendication 1, dans lequel la saillie (5) est mise en prise à l'intérieur du guide (7) sans jeu dans une direction sensiblement perpendiculaire à l'axe (B) de rotation de la roue à cames (6).

3. Système de miroir (1) selon la revendication 1 ou 2, dans lequel la roue à cames (6) comprend une plaque de base rotative (8) sur laquelle le guide (7) est monté, dans lequel la plaque de base (8) est de préférence dentée sur sa circonférence extérieure.

4. Système de miroir (1) selon l'une quelconque des revendications 1 à 3, dans lequel le guide (7) forme au moins une section d'une spirale autour d'un axe (B) de rotation de la roue à cames (6).

5. Système de miroir (1) selon l'une quelconque des revendications 1 à 4, dans lequel la roue à cames (6) est configurée de telle sorte qu'elle doit être mise en rotation sur au moins 180° pour déplacer la saillie (5) d'une position la plus étendue à une position la plus rétractée.

6. Système de miroir (1) selon l'une quelconque des revendications 1 à 5, dans lequel la roue à cames (6) est configurée pour conférer une vitesse constante à la monture de miroir (2) lors d'une rotation de la roue à cames (6) avec une vitesse angulaire constante sur au moins une section du guide (7).

7. Système de miroir (1) selon l'une quelconque des revendications 1 à 6, dans lequel le côté de la monture de miroir muni de la saillie est sollicité vers le boîtier au moyen d'un ressort.

8. Système de miroir (1) selon l'une quelconque des revendications 1 à 7, dans lequel la roue à cames (6) est montée dans le boîtier (3) de telle sorte que son axe (B) de rotation se trouve symétriquement entre les positions de montage de la monture de miroir (2) dans le boîtier (3).
